# EUROPEAN PATENT SPECIFICATION

(11) **EP 1 497 898 B1**
(45) Date of publication and mention of the grant of the patent: **26.04.2006**
(21) Application number: 03704792.5
(22) Date of filing: 14.02.2003
(51) Int. Cl.: H02G 1/08

(54) **CABLE INSTALLATION**
KABELVERLEGUNG
INSTALLATION DE CABLE

(30) Priority: 24.04.2002 GB 0209305
(43) Date of publication of application: 19.01.2005
(60) Divisional application: 05106698.3
(73) Proprietor: International Business Machines Corporation, Armonk, N.Y. 10504 (US)
(72) Inventor: Harley, Ian, Southampton, Hampshire SO30 2XP (GB)
(74) Representative: Watson, Justine Nicola C.
(86) International application number: PCT/GB2003/000667
(87) International publication number: WO 2003/092135

(56) References cited:
- WO-A-00/60714
- DE-A- 4 203 093
- DE-U- 8 520 355
- GB-A- 2 378 212
- US-A- 3 166 810

## Description

### Field of the invention

The present invention relates to the installation of cabling.

### Background of the invention.

Twisted pair copper cabling has traditionally been used within buildings to carry voice and data to end-user equipment such as computers, telephones and the like and typically hundreds of metres of cabling has to be run above ceiling or under floor to reach that user equipment.

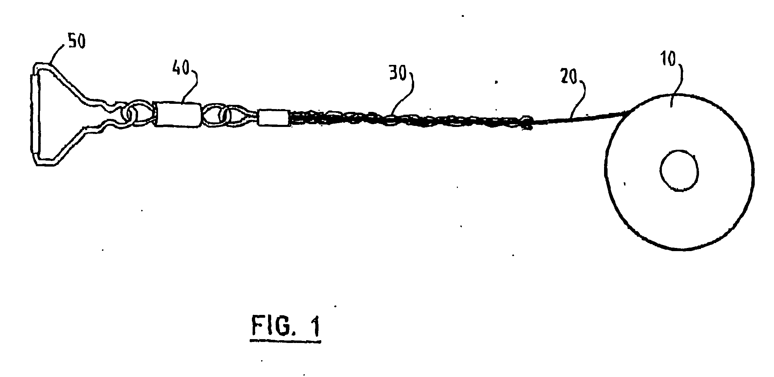

Figure 1 shows the components involved in installing such cabling according to the prior art. Installers typically pull such cables in from a drum 10 containing 500 metres of cable 20. The end of the cable 20 is placed in a pulling sock 30 made of a steel lattice and as the cable is pulled this lattice tightens around the length of cable it surrounds to securely grip it.

Potential damage to the cables during the installation process caused by over stretching of the twisted pair conductors inside the insulating sheath is a big problem. Over stretching causes the distance between the twisted pairs to be reduced giving rise to an increase in cross-talk and reducing the effectiveness of the cables. Thus a pulling fuse 40 or similar device (such as the magnetic linkage disclosed in copending patent application GB0118861.4) is used to prevent too great a force being applied to the cable during the installation process (the linkage is adapted to break when a predetermined force is applied and has to be reset before installation can continue). Attached to the other end of the pulling fuse via the fuse's quick release loop is a handle 50 used by the installers to manually pull the cable into position.

The onset of Cat 6 / 7 standards has placed demands on manufacturers for even greater performance and bandwidth. Cabling such as Shielded Foiled Twisted Pair (SFTP) has been developed to meet these increased demands. With such cabling, each twisted pair conductor is surrounded by a layer of aluminium foil. All the pairs are then covered by a further layer of foil and then a braided shield. This new configuration permits a higher transfer rate and is even more highly dependent upon the precise positioning of the twisted pair conductors within the cabling sheath.

The use of a pulling sock is not suitable for gripping these new cables for a number of reasons. Current pulling socks are designed for much thicker cables and it is physically difficult to make them small enough to grip the newer type of cable securely. Further, the length of the cable gripped by the pulling sock has to be thrown away. This is because, the gripping action of the sock is likely to have displaced the conductors within the cabling sheath and thus this part of the cable cannot be relied upon to work properly.

Further, the pulling sock is required to be relatively long in order to achieve a sufficient clamping force on the cable. This is because the sock's steel lattice only tightens around the cable as it is pulled. If the sock was any shorter, the cable might well have been pulled out of the sock before the steel lattice had a chance to grip it properly. The length of the pulling sock means that a large amount of cable is wasted.

WO 00/60714 discloses a device for connecting a wire or cable enabling the traction thereof. This device comprises a ring provided with one or several longitudinal grooves, an end piece provided with the same number of longitudinal grooves as in the ring and designed to fit inside said ring, whereby the longitudinal grooves in the end piece and the ring, when they are located opposite each other, form at least one housing that is adapted to the section of each wire, means (preferably by screwing) that lock the end piece inside the ring in an angular locking position where the corresponding grooves are offset in relation to the others, and protruding elements (threads on the inner side of the ring for example) that are adapted to grasp each wire of the cable in said locking position- This device can be used for drawing wires or electric cables in ducts or casings.

DE 42 03 093 discloses a tool for pulling and drawing cable through a trough or channel and is able to grip the end of a wire loop around a cylindrical element which can rotate and slide within a slot

### Summary of the Invention

Accordingly, the invention provides a device for gripping a cable, comprising an elongated housing for slidably receiving the cable axially thereof, the housing having a central bore along which the cable can pass, and an aperture which opens in at least one side of the housing thereby enabling the end of the cable to leave the housing through such aperture, the housing further being configured such that the cable can be received back by the housing to form a loop, the device further including means for securing at least the part of the cable received back by the housing, wherein the housing has a head, the device being characterized in that said means for securing the cable loop comprises a first lock piece for temporarily holding the cable loop against the head and a second lock piece for securing the first lock piece against the cable loop.

The device is intended to be used in place of the prior art pulling sock shown in figure 1. The prior art pulling sock has a loop which permits it to be attached to a pulling fuse or similar device. The device of WO 00/60714 also has a cavity in the device's head which permits its fixing with a means of traction. The gripping device of the present invention is not supplied with a loop or other means of traction. Instead the cable itself is used to form a loop by which the cable can be attached to the pulling fuse or similar device. (Of course, the gripping device could be attached directly to a handle or a pulling rope, but this would risk the installers inadvertently over stretching the cable and thereby damaging it).

Using the cable loop as an attachment means is particularly advantageous. This reduces the number of parts that need to he supplied with the device and therefore reduces manufacturing costs.

### Brief Descriotion of the Drawings

A preferred embodiment of the present invention will now be described, by way of example only, and with reference to the following drawings:
Figure 1 shows the components involved in installing cabling according to the prior art and as discussed hereinbefore;
Figures 2a and 2b show a cable gripper in accordance with a preferred embodiment of the present invention:
Figure 2c is a longitudinal cross-section of the cable gripper prior to the second lock piece being tightened against the first lock piece (not to scale).
Figure 2d is a longitudinal cross-section of the cable gripper after tightening the second lock piece (not to scale);

### Detailed Descriotion

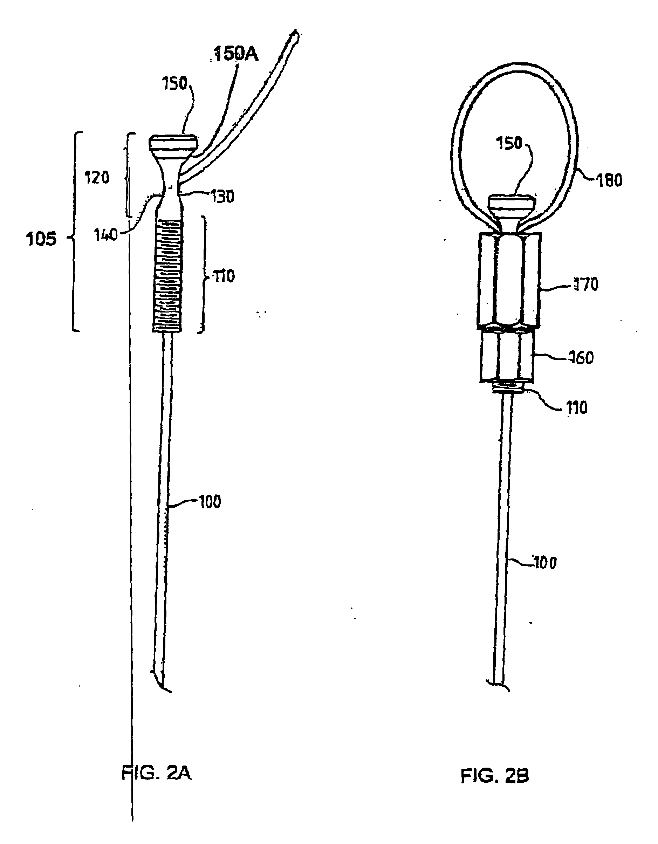

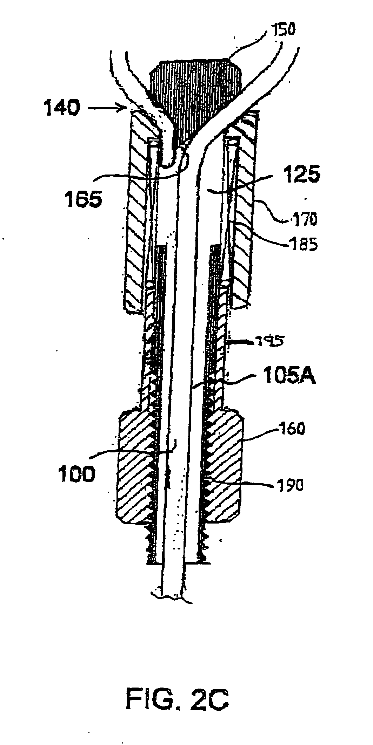

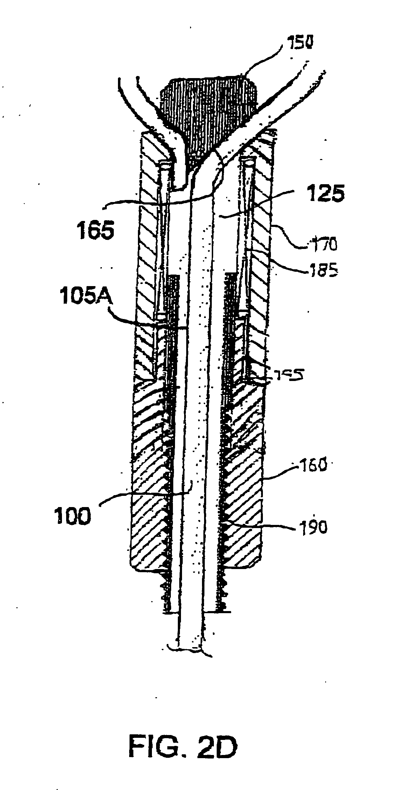

Referring to figures 2a, 2b, 2c and 2d, a housing comprises a hollow tubular body 105 for receiving a cable 100 axially within its central bore 105A. A lower.portion 110 of the body is threaded. An upper portion 120 has a head 150 with an angled under surface 150A and also a transverse aperture 125 (see figure Zc, 2d) which spans the full width of the body 105. The aperture 125 has an exit 130 through which the free end of the cable 100, which enters the body 105 at its lower end remote from the head 150 and travels up the centre of the body, can be pulled by an installer (as shown in the figure 2a). The aperture 125 extends to an entrance 140 to permit the free end of the cable to be fed back into the body 105 to form a loop 180. The ceiling 165 (figures 2c, 2d) of the aperture 125 is preferably slanted upwardly to the exit 130 so as to guide the cable out through.the exit.

A first lock piece 170 slides axially over the tubular body 105 to make contact with the loop at the entrance 140 and exit 130 of the aperture 125 to force the cable against the angled surface 150A of the head 150 at these points. A second lock piece 160 is threaded onto the cylindrical body and can be tightened up against the first lock piece 170 to clamp the cable loop in place.

A helical spring 185 as shown in figure 2c and 2d is under compression between the first and second lock pieces so that the first lock piece 170 is biased towards the head 150. Thus, force has to be applied to this piece 170 in a direction away from the head in order to be able to draw the cable out of the exit 130 and to place the free end of the cable into the entrance 140 of aperture 125 to form the loop 180. The spring site on a tubular extension 195 of the second lock piece 160. Once the piece 170 is released the spring urges the lock piece 170 back towards the head in order to temporarily hold the cable in place (as shown in figure 2c) until the second lock piece 160 can be tightened on threads 190 to secure loop 180 (see figure 2d). This effect of the spring means that tightening of the second lock piece is a simple one-handed job. Further the spring ensures that the resting position of the first lock piece is always up against the head and so inhibits dirt from entering the housing and thereby hampering operation of the parts.

In an alternative embodiment, not shown, the aperture 125 may not extend fully across the width of the body 105, but only from the exit 130 to the hollow central bore 105A of the body 105. In this case a recess is formed in the side of the body opposite the exit 130, such recess being located where the entrance 140 is in the illustrated embodiment. In use, the free end of the cable 100 is tucked into this recess and clamped by the first lock piece 170 as before.

In this further embodiment, too, the surface 150A and/or the top end of the lock piece 170 is relieved in the vicinity of the exit 130 so that the cable 100 is only clamped at the free end tucked into the recess. This allows an installer to pull on the cable 100 and for the cable loop 180 to tighten around the device to which it is attached. This variation can also be used where the aperture 125 does extend across the full width of the body 105; in that case the cable is clamped only at the entrance 140.

The disclosed cable gripper provides a simple but effective way of attaching a cable to a pulling fuse or similar device. Unlike the pulling sock it can be dimensioned so as to work with the newer type of cables. Further, much less cable is damaged than with this prior art solution. Only the part of the cable (at least initially) used to form the loop need be thrown away. This is as opposed to the whole length of cable inside the prior art sock. This is due to the way in which the cable is secured which allows the device to be far shorter than the pulling sock, whilst still achieving enough of a clamping force on the cable. The pulling sock is necessarily of a far greater length in order to securely grip the cable. This is because the sock's steel lattice only tightens around the cable as it is pulled. If the sock was any shorter, the cable might well have been pulled out of the sock before the steel lattice had a chance to grip it properly.

Further the cable gripper of the present invention is particularly advantageous because the attachment means is the cable itself (i.e. loop 180). This reduces the number of parts that have to be supplied and so lessens manufacturing costs.

The device can also be made of a lightweight material such as aluminium. Prior art pulling socks are much bigger and therefore heavier. Installers will often be pulling in four cables at a time, each gripped by a pulling sock. The combined weight of the four pulling socks, adds to the force that needs to be exerted to pull the cables into position. However if too great a force is exerted then the cables will be over stretched and thus their internal conductors damaged. As discussed above a pulling fuse or similar device is used which will break when a predetermined force is applied by installers and has to be reset before the installation can continue. Since the predetermined breaking force is typically low when pulling in the more fragile cables (e.g. 4 x 4 pair cables pulled in by hand = 125N), the lighter the cable gripping device is, the better. This is because a heavier device will encourage installers to exert more force during the installation process and thus they are more likely to have to reset the pulling fuse or similar device.

## Claims

1. A device for gripping a cable (100), comprising an elongated housing (105) for slidably receiving the cable axially thereof, the housing having a central bore (105A) along which the cable can pass, and an aperture (125) which opens in at least one side of the housing thereby enabling the end of the cable to leave the housing through such aperture, the housing further being configured such that the cable can be received back by the housing to form a loop (180), the device further including means for securing at least the part of the cable received back by the housing, wherein the housing has a head (150), the device being **characterized in that** said means for securing the cable loop (180) comprises a first lock piece (170) for temporarily holding the cable loop against the head (150) and a second lock piece (160) for securing the first lock piece (170) against the cable loop.

2. The device of claim 1, wherein the housing is tubular.

3. The device of claim 1 or 2, wherein the housing has a recess in the side of the housing opposite the aperture opening, the end of the cable being received in such recess.

4. The device of claim 1 or 2, wherein the aperture extends fully across the width of the housing to open in the opposite sides of the housing, the cable leaving the housing through one end of the aperture and being received back by the housing through the other end of the aperture.

5. The device of any preceding claim, wherein the ceiling of the aperture is slanted (150A) to guide the cable out through the aperture.

6. The device of any preceding claim further comprising a biasing means for biasing the first lock (170) piece towards the head.

## Patentansprüche

1. Einrichtung zum Fassen eines Kabels (100), wobei die Einrichtung ein längliches Gehäuse (105) umfasst, welches das Kabel axial verschiebbar aufnimmt, und das Gehäuse eine Mittelbohrung (105A), durch welche das Kabel geführt werden kann, und eine an mindestens einer Seite des Gehäuses vorgesehene Öffnung aufweist, durch welche das Kabelende aus dem Gehäuse austreten kann, wobei das Gehäuse ferner so gestaltet ist, dass das Kabel durch Bildung einer Schleife (180) vom Gehäuse zurückgehalten werden kann, wobei die Einrichtung ferner ein Mittel zum Fixieren mindestens des vom Gehäuse zurückgehaltenen Teils des Kabels beinhaltet, das Gehäuse einen Kopfteil (150) aufweist und die Einrichtung **dadurch gekennzeichnet ist, dass** das Mittel zum Fixieren der Kabelschleife (180) ein erstes Klemmteil (170) zum vorübergehenden Haltern der Kabelschleife gegenüber dem Kopfteil (150) und ein zweites Klemmteil (160) zum Haltern des ersten Klemmteils (170) gegenüber der Kabelschleife umfasst.

2. Einrichtung nach Anspruch 1, bei welcher das Gehäuse rohrförmig ist.

3. Einrichtung nach Anspruch 1 oder 2, bei welcher das Gehäuse an der Seite des Gehäuses eine Aussparung aufweist, welche der Öffnung gegenüber liegt, wobei das Kabelende in einer solchen Aussparung liegt.

4. Einrichtung nach Anspruch 1 oder 2, bei welcher sich die Öffnung über die gesamte Breite des Gehäuses erstreckt und nach den beiden entgegengesetzten Seiten des Gehäuses zeigt, wobei das Kabel durch ein Ende der Öffnung austritt und durch das andere Ende der Öffnung wieder in das Gehäuse eintritt.

5. Einrichtung nach einem der vorangehenden Ansprüche, bei welcher die obere Abdeckung der Öffnung abgeschrägt (150A) ist, um das Kabel durch die Öffnung hinauszuführen.

6. Einrichtung nach einem der vorangehenden Ansprüche, welche ferner ein Andruckmittel zum Andrücken des ersten Klemmteils (170) gegen den Kopf umfasst.

## Revendications

1. Dispositif destiné à saisir un câble (100) comprenant un boîtier allongé (105) destiné à recevoir avec possibilité de coulissement le câble axialement par rapport à celui-ci, le boîtier présentant un alésage central (105A) le long duquel le câble peut passer, et une ouverture (125) qui s'ouvre dans au moins un côté du boîtier, en permettant ainsi que l'extrémité du câble quitte le boîtier au travers de cette ouverture, le boîtier étant en outre configuré de sorte que le câble peut être reçu en retour par le boîtier pour former une boucle (180), le dispositif comprenant en outre un moyen destiné à fixer au moins la partie du câble reçue en retour par le boîtier, où le boîtier comporte une tête (150), le dispositif étant **caractérisé en ce que** ledit moyen destiné à fixer la boucle de câble (180) comprend un premier élément de blocage (170) destiné à maintenir temporairement la boucle de câble contre la tête (150) et un second élément de blocage (160) destiné à fixer le second élément de blocage (170) contre la boucle de câble.

2. Dispositif selon la revendication 1, dans lequel le boîtier est tubulaire.

3. Dispositif selon la revendication 1 ou 2, dans lequel le boîtier comporte un évidement du côté du boîtier opposé à l'ouverture débouchante, l'extrémité du câble étant reçue dans ledit évidement.

4. Dispositif selon la revendication 1 ou 2, dans lequel l'ouverture s'étend complètement sur la largeur du boîtier pour déboucher sur les côtés opposés du boîtier, le câble quittant le boîtier au travers d'une première extrémité de l'ouverture et étant reçu en retour par le boîtier au travers de l'autre extrémité de l'ouverture.

5. Dispositif selon l'une quelconque des revendications précédentes, dans lequel la partie supérieure de l'ouverture est inclinée (150A) pour guider le câble sortant au travers de l'ouverture.

6. Dispositif selon l'une quelconque des revendications précédentes, comprenant en outre un moyen de sollicitation destiné à solliciter le premier élément de blocage (170) vers la tête.
